# DEMANDE DE BREVET EUROPEEN

(11) **EP 3 276 569 A1**
(43) Date de publication de la demande: **31.01.2018**
(21) Numéro de dépôt: 17183904.6
(22) Date de dépôt: 31.07.2017
(51) Int. Cl.: G06Q 50/16, G06Q 50/08, G06Q 10/06

(54) **DISPOSITIF MOBILE DE VISUALISATION D'UN BÂTIMENT A CONSTRUIRE SUR UN TERRAIN ET PROCÉDÉ ASSOCIÉ**

(30) Priorité: 29.07.2016 FR 1657395
(71) Demandeur: Lapeyre, Philippe, 31000 Toulouse (FR)
(72) Inventeur: Lapeyre, Philippe, 31000 Toulouse (FR)
(74) Mandataire: Cabinet Plasseraud

(57) **Abrégé**

L'invention propose un dispositif de visualisation d'un bâtiment à construire comprenant une mémoire pour stocker une base de données cartographique de terrains constructibles et une base de données géométrique de bâtiments à construire; un capteur de position du dispositif mobile; une interface homme-machine comprenant un écran d'affichage et une dalle tactile; un calculateur électronique couplé aux bases de données et au capteur de manière à fournir à l'interface homme-machine au moins une image synthétique comportant une représentation conforme de la superposition d'un bâtiment sur un terrain. Le calculateur sélectionne le terrain à représenter le plus proche du dispositif et le bâtiment coïncidant le plus avec une zone constructible associée au terrain sélectionné.

## Description

### Domaine technique

La présente invention concerne un dispositif mobile de visualisation d'un bâtiment à construire sur un terrain et le procédé associé.

### Technique antérieure

La réalisation d'un projet de construction immobilier neuf par des professionnels de l'immobilier est une affaire de longue haleine. Pour sa réussite, un tel projet appelle la réunion de deux étapes indissociables : trouver le terrain capable physiquement et juridiquement de recevoir le bien immobilier et choisir le constructeur qui assurera la réalisation du bien immobilier.

La première étape nécessite de prospecter du côté des agences immobilières, auprès des offices de notaires, sur les sites web spécialisés dans l'immobilier, ou encore en consultant les petites annonces dans les journaux. Dans cette optique, le porteur de projet a le choix entre deux types de terrains constructibles, à savoir un terrain isolé et un terrain compris dans un lotissement. L'avantage du terrain en lot est qu'il est assuré d'être constructible et viable alors que dans le cas d'un terrain isolé, le porteur de projet devra vérifier la constructibilité de ce dernier. La deuxième étape nécessite de choisir le constructeur qui va bâtir le bien immobilier.

Si ces deux étapes nécessitent d'être réalisées de manière séquentielle, dans la majorité des cas elles sont réalisées simultanément. En effet, les porteurs de projet font généralement appel à des partenariats entre lotisseurs constructeurs, c'est-à-dire des professionnels qui construisent des biens immobiliers sur des terrains de lotisseurs partenaires. Dans ce cas, un porteur de projet ne se verra proposer que des configurations prédéterminées de projets réalisables.

Toutefois, cette configuration n'est pas avantageuse pour tous les porteurs de projet. En effet, certains porteurs de projet souhaitent faire construire un bien immobilier sur un terrain acquis préalablement et dont le lotisseur ou le propriétaire du terrain n'est pas nécessairement un partenaire du constructeur du bien immobilier. D'autres porteurs de projet souhaitent d'abord choisir le bien immobilier à construire puis voudraient connaître les terrains constructibles sur lesquels leur bien immobilier pourrait être construit.

Au vu de la très grande quantité de terrains disponibles et de biens immobiliers à construire, ces porteurs de projet sont submergés par le nombre d'informations à prendre en considération pour déterminer si un terrain constructible est compatible avec un bien immobilier à construire.

Il est donc important de proposer une solution permettant de résoudre les problèmes évoqués précédemment.

### Résumé de l'invention

L'invention propose de visualiser un bâtiment à construire directement sur un terrain afin de déterminer leur compatibilité.

À cet effet, l'invention propose un dispositif de visualisation d'un bâtiment à construire comprenant :
- une mémoire apte à stocker une base de données cartographique et une base de données géométrique,
   - la base de données cartographique comprenant une ou plusieurs données représentatives de terrains, chaque terrain comprenant au moins une zone constructible,
   - la base de données géométrique comprenant une ou plusieurs données représentatives de bâtiments à construire,
- au moins un capteur de position du dispositif mobile,
- une interface homme-machine comprenant un écran d'affichage conçu pour présenter des informations à un utilisateur et une dalle tactile pour détecter l'appui sur certaines zones, l'appui sur certaines zones formant un stimulus, et
- un calculateur électronique comprenant des moyens de traitement des informations issues des bases de données et du capteur, les moyens de traitement étant configurés de manière à fournir à l'interface homme-machine au moins une image synthétique comportant une représentation conforme de la superposition d'un bâtiment sur un terrain, les moyens de traitement, en réponse à au moins un stimulus, sont en outre configurés pour,
   - sélectionner le terrain à représenter le plus proche du dispositif, à partir de la position du dispositif et de l'une ou plusieurs des zones constructibles de la base de données cartographique, et
   - sélectionner le bâtiment à représenter en réponse à une mise en coïncidence entre la zone constructible associée au terrain sélectionné et l'un ou plusieurs des bâtiments de la base de données géométrique.

De manière avantageuse, un porteur de projet visitant un terrain constructible, peut déterminer rapidement la compatibilité technique de(s) bien(s) immobilier(s) qui l'intéresse(nt). Ainsi, par exemple, celui qui souhaite faire construire sa maison individuelle, peut gagner un temps important sur la recherche du terrain et le choix du constructeur. Un avantage du dispositif selon l'invention est qu'il permet de réaliser un contrôle de compatibilité en temps réel du couple terrain-bâtiment, et ce, afin de ne pas rater d'opportunité.

Dans une mise en oeuvre, l'interface homme-machine est en outre configurée pour présenter une pluralité de bâtiments coïncidant avec la zone constructible associée au terrain sélectionné à l'utilisateur, et recueillir le bâtiment sélectionné par l'utilisateur en réponse à au moins un stimulus.

Dans une autre mise en oeuvre, l'interface homme-machine est en outre configurée pour permettre à un utilisateur d'entrer une valeur de rayon d'un cercle. Ensuite, l'interface homme-machine présente une pluralité de terrains dont la zone constructible coïncide avec un cercle dont le rayon correspond à la valeur de rayon entrée et dont le centre coïncide avec la position du dispositif. Enfin, l'interface homme-machine recueille le terrain sélectionné par l'utilisateur en réponse à au moins un stimulus.

Avantageusement, le porteur de projet peut élargir son champ de recherche dans les alentours du terrain qu'il visite.

Selon un mode de réalisation particulier, le dispositif comprend en outre :
- une base de données de formes comprenant un ou plusieurs modèles de formes géométriques,
   - l'interface homme-machine est en outre couplée à la mémoire et au capteur de position pour permettre à un utilisateur d'enregistrer une pluralité de positions du dispositif dans la mémoire en réponse à une pluralité de stimuli,
   - les moyens de traitement du calculateur électronique comprennent un composant d'acquisition de forme géométrique, conçu pour déterminer la répartition spatiale de la pluralité de positions du dispositif à partir de la base de données de formes et de la pluralité de positions du dispositif, et
   - les moyens de traitement du calculateur électronique sont en outre configurés pour ajouter la forme géographique déterminée en tant que nouvelle entrée dans la base de données cartographique.

Avantageusement, le porteur de projet peut ajouter une ou plusieurs zones constructibles d'un terrain considéré en se déplaçant physiquement avec le dispositif mobile sur le terrain.

Selon une mise en oeuvre, le dispositif comprend en outre :
- des moyens d'acquisition d'images couplés au calculateur électronique et conçus pour acquérir au moins une image de l'environnement du dispositif, et
- les moyens de traitement du calculateur électronique sont en outre configurés de manière à fournir à l'interface homme-machine au moins une image augmentée de l'image synthétique à partir de l'image d'environnement.

De manière avantageuse, le porteur de projet peut visualiser son projet immobilier dans son environnement naturel.

Selon une autre mise en oeuvre, le dispositif comprend en outre :
un capteur gyroscopique triaxial couplé au calculateur électronique et conçu pour fournir une information d'orientation tridimensionnelle du dispositif dans un plan de référence de l'écran d'affichage, et
   - les moyens de traitement du calculateur électronique sont en outre configurés de manière à altérer l'orientation de l'image augmentée à partir de l'information d'orientation tridimensionnelle.

De manière avantageuse, le porteur de projet peut se déplacer avec le dispositif mobile afin de visualiser son projet immobilier selon différentes orientations.

En outre, les moyens de traitement, en réponse à au moins un stimulus, sont configurés pour sélectionner le bâtiment à représenter. En pratique, la sélection est basée sur une mise en coïncidence entre la zone géographique associée au terrain sélectionné et la zone géographique associée à l'un ou plusieurs des bâtiments de la base de données géométrique.

Dans un autre exemple, le capteur de position est un capteur de position global par satellites, GPS.

Dans un exemple particulier, l'image synthétique et l'image augmentée sont des images tridimensionnelles sous la forme d'une représentation en perspective dans un plan de référence de l'écran d'affichage.

Enfin, l'invention propose également un procédé de visualisation mobile d'un bâtiment à construire comprenant :
- l'enregistrement préalable d'objets dans une base de données cartographique et une base de données géométrique,
   - la base de données cartographique comprenant une ou plusieurs données représentatives de terrains, chaque terrain comprenant au moins une zone constructible,
   - la base de données géométrique comprenant une ou plusieurs données représentatives de bâtiments à construire,
- la détermination d'au moins une position GPS,
- la fourniture d'au moins une image synthétique à une interface homme-machine à partir des bases de données et de la position GPS, l'interface homme-machine comprenant un écran d'affichage conçu pour présenter des informations à un utilisateur et une dalle tactile pour détecter l'appui sur certaines zones, l'appui sur certaines zones formant un stimulus, l'image synthétique comportant une représentation conforme de la superposition d'un bâtiment sur un terrain, et, en réponse au stimulus,
   - la sélection du terrain à représenter le plus proche du dispositif, à partir de la position du dispositif et de l'une ou plusieurs des zones constructibles de la base de données cartographique, et
   - la sélection du bâtiment à représenter en réponse à une mise en coïncidence entre la zone constructible associée au terrain sélectionné et l'un ou plusieurs des bâtiments de la base de données géométrique.

### Brève description des dessins

Les caractéristiques et avantages de l'invention seront mieux compris à la lecture de la description qui va suivre et en référence aux dessins annexés, donnés à titre illustratif et nullement limitatif.

La figure 1 représente un exemple d'architecture du dispositif mobile selon l'invention.

La figure 2a représente une vue de l'écran d'affichage de l'interface homme-machine selon l'invention.

La figure 2b représente une autre vue de l'écran d'affichage de l'interface homme-machine selon l'invention.

La figure 3 représente un organigramme d'un procédé selon l'invention.

### Description des modes de réalisation

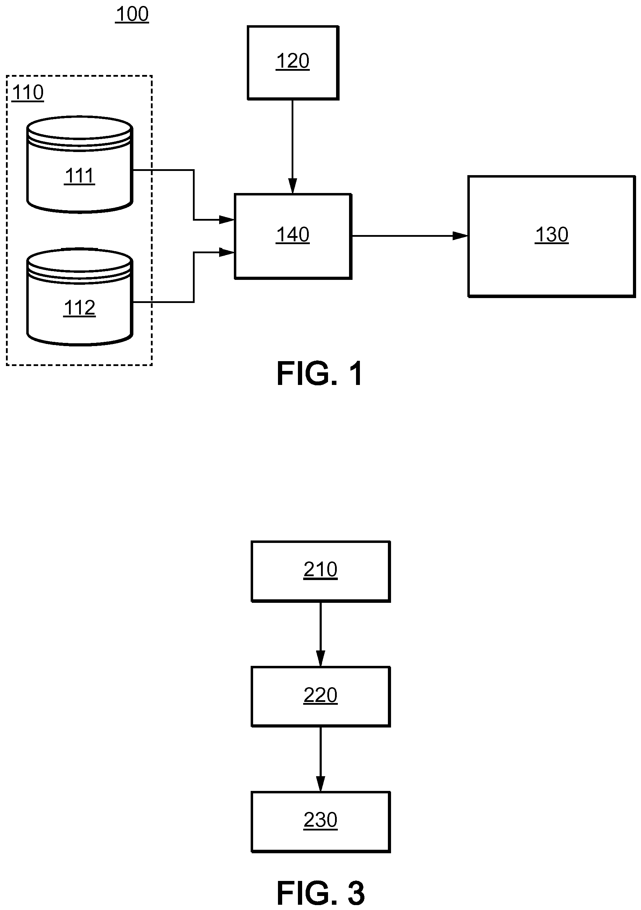

La figure 1 représente un exemple d'architecture du dispositif mobile, objet de l'invention.

Dans l'exemple de la figure 1 le dispositif mobile est une tablette numérique 100. Toutefois, il est également envisagé d'autres mises en oeuvre du dispositif mobile par exemple sous la forme d'un téléphone intelligent. La tablette numérique 100 comprend une mémoire 110, un capteur de position 120, une interface homme-machine 130 et un processeur 140.

La mémoire 110 est par exemple une mémoire non volatile de type ROM, une mémoire volatile de type RAM ou tout autre moyen permettant le stockage de données, qui peut être lue et écrite par le processeur 140. La mémoire 110 est apte à stocker une ou plusieurs bases de données. Ces bases de données peuvent avoir été installées dans la mémoire 110 lors de la mise en service de la tablette numérique 100. En outre, les données de ces bases peuvent également provenir d'une source de données hébergées dans un nuage informatique externe à la tablette numérique 100. Dans ce cas de figure, le dispositif mobile comprend également un transceiver de type connu configuré pour transmettre et recevoir les données par voie hertzienne.

Dans l'exemple de la figure 1, les bases de données incluent une base de données cartographique 111 et une base de données géométrique 112.

La base de données cartographique 111 comprend une ou plusieurs données représentatives de terrains. On entend par terrain, une propriété foncière délimitée par des limites séparatives, que cela soit par rapport aux propriétés privées voisines ou au domaine public. De manière courante, l'ensemble des propriétés foncières est inventorié dans un cadastre. Dans une mise en oeuvre, les limites de chaque terrain sont décrites par une pluralité de données de la base de données cartographique 111. Par exemple, ces données comprennent des informations planimétriques définies par des coordonnées planimétriques, c'est-à-dire de latitude X et de longitude Y. Par exemple, les informations planimétriques correspondent à une carte de terrain numérisée. Dans ce cas, ces informations peuvent être fournies, par exemple pour le territoire français, par l'Institut Géographique National ou provenir d'une base de données cadastrale telle que www.cadastre.gouv.fr ou Géofoncier. Dans un exemple particulier, chaque information planimétrique est associée à une information altimétrique définie par une coordonnée altimétrique Z. En outre, les données de la base de données cartographique 111 comprennent des informations de constructibilité associées à chaque terrain. En effet, chaque terrain de la base de données cartographique 111 comprend au moins une zone constructible identifiée comme telle. Le fait qu'une zone du terrain soit identifiée comme constructible, signifie qu'au moins un bâtiment peut y être construit. Dans la majorité des cas, l'étendue de la zone constructible est inférieure à l'étendue du terrain associé. La constructibilité d'un terrain s'apprécie tant au niveau administratif que sur le plan technique. Sur le plan administratif, le futur propriétaire du terrain doit obtenir tous documents nécessaires, tel un permis de construire, préalablement à la construction du bâtiment. Les règles définissant les distances à respecter entre un bâtiment à construire et les limites séparatives se trouvent dans un POS (Plan d'occupation des sols) ou un PLU (Plan local d'urbanisme). Sur le plan technique, le propriétaire du terrain a l'obligation de viabiliser le terrain, c'est-à-dire de l'aménager en un ou plusieurs espaces habitables notamment en y assurant la desserte aux réseaux d'eau, d'électricité, de gaz, d'assainissement. Dans une mise en oeuvre particulière, une zone constructible est définie par une pluralité de coordonnées planimétriques. De manière optionnelle, la base de données cartographique 111 comprend d'autres d'informations qui peuvent être associées à chaque terrain. Par exemple, des informations de couleur représentant le type de végétation, le cours des rivières, le tracé des routes, les agglomérations ainsi que les noms de ces rivières, routes et agglomérations et d'autres indications telles que des informations réglementaires liées au POS ou au PLU du lieu où se trouve le terrain.

De retour à la figure 1, la base de données géométrique 112 comprend une ou plusieurs données représentatives de bâtiments à construire. On entend par bâtiment un bien immobilier tel qu'un logement, un bureau ou local commercial ou à usage professionnel. Dans une mise en oeuvre, les données de la base de données géométrique 112 comprennent des informations géométriques de surface du bâtiment à construire. Par exemple, les informations géométriques de surface peuvent être codées suivant une norme internationale telle que la norme IGES ("Initial Graphic Exchange Specification" en anglais) ou la norme DXF ("Data Exchange File" en anglais). Dans une autre mise en oeuvre, les données de la base de données cartographique 111 comprennent également des informations géométriques de volumes du bâtiment à construire. En outre, dans une mise en oeuvre particulière, les données de la base de données géométrique 112 comprennent des informations géométriques associées à chaque bâtiment. En effet, dans la mise en oeuvre particulière, chaque bâtiment de la base de données géométrique 112 est compris dans au moins une zone géographique identifiée comme telle. Dans une mise en oeuvre, les informations géométriques sont définies par une pluralité de coordonnées planimétriques. Dans une autre mise en oeuvre, les informations géométriques correspondent à des données d'étendue géographique comme, par exemple, un quartier, une ville, une région, un pays et un continent. De manière optionnelle, la base de données géométrique 112 comprend d'autres d'informations qui peuvent être associées à chaque bâtiment. Par exemple, des informations de style du bâtiment, des informations de conformité à une norme d'habitabilité ou des informations de coûts de fabrication.

De retour à la figure 1, le capteur de position 120 est conçu pour déterminer la position courante du dispositif mobile. Dans une mise en oeuvre, le capteur de position 120 est associé à un système de positionnement par satellites, notamment de type GPS ("Global Positioning System" en anglais), par exemple Navstar, Galileo, GNSS, GLONASS. Dans une autre mise en oeuvre, le capteur de position 120 peut être une centrale à inertie.

Dans l'exemple de la figure 1, l'interface homme-machine 130 comprend un écran d'affichage et une dalle tactile. L'écran d'affichage est conçu pour afficher des informations qui lui sont communiquées à un utilisateur de la tablette numérique 100. Par exemple, l'écran d'affichage peut être un écran plasma, un écran à cristaux liquides de type LCD ou tout autre type d'écran d'affichage. Dans une mise en oeuvre particulière, l'écran d'affichage peut faire partie d'une optique de visualisation de casque, comme un casque à réalité augmentée. La dalle tactile est conçue pour détecter l'appui sur certaines zones de sorte que l'appui sur certaines zones forme un stimulus. Dans un exemple, la dalle tactile est transparente et est superposée à l'écran d'affichage le rendant ainsi manipulable par un utilisateur directement avec au moins l'un de ses doigts.

De retour à la figure 1, le processeur 140 est interfacé avec des composants matériels qui fournissent un rendu graphique. Par exemple, ces composants matériels sont un ou plusieurs microprocesseurs, des mémoires, des appareils de stockage, des cartes d'interface ou tout autre composant standard. De plus, le processeur 140 fonctionne avec des logiciels ou des micrologiciels. Le processeur 140 est capable de lire des instructions-machine pour réaliser diverses tâches, calculs et fonctions de contrôle et générer les signaux à afficher et les autres données utilisées par l'interface homme-machine 130. Dans un exemple, ces instructions sont stockées dans la mémoire 110.

Dans l'exemple de la figure 1, le processeur 140 est couplé avec la mémoire 110, le capteur de position 120 et l'interface homme-machine 130.

Le processeur 140 est configuré pour recevoir et calculer la position du dispositif mobile, à savoir la localisation courante de la tablette numérique 100 issue du capteur de position 120.

En réponse à au moins un stimulus issu de l'interface homme-machine 130 et à partir de la position du dispositif mobile, le processeur 140 obtient les données concernant le terrain à représenter à partir de la base de données cartographique 111. En pratique, le processeur 140 sélectionne le terrain à représenter le plus proche du dispositif, à partir de la position de la tablette numérique 100 et de l'une ou plusieurs des zones constructibles de la base de données cartographique 111. Pour cela, le processeur 140 peut utiliser un algorithme connu pour déterminer la position de la tablette numérique 100 par rapport à chaque zone constructible de la base de données cartographique 111, puis sélectionner le terrain associé à la zone constructible la plus proche de la tablette numérique 100 en fonction de la position déterminée. Par exemple, la zone constructible associée au terrain sélectionnée peut être celle dont le barycentre est le plus proche de la position de la tablette numérique 100.

Dans une mise en oeuvre particulière, l'interface homme-machine 130 est en outre configurée pour permettre à un utilisateur d'entrer une valeur de rayon d'un cercle. Puis, l'interface homme-machine 130 présente une pluralité de terrains dont la zone constructible coïncide avec un cercle dont le rayon correspond à la valeur de rayon entrée et dont le centre coïncide avec la position de la tablette numérique 100. Enfin, l'interface homme-machine 130 recueille le terrain sélectionné par l'utilisateur en réponse à au moins un stimulus.

Dans une autre mise en oeuvre, l'interface homme-machine 130 est en outre configurée pour permettre à un utilisateur de dessiner une zone de recherche avec au moins un de ses doigts. Puis, l'interface homme-machine 130 présente une pluralité de terrains dont la zone constructible coïncide avec la zone de recherche. Enfin, l'interface homme-machine 130 recueille le terrain sélectionné par l'utilisateur en réponse à au moins un stimulus.

Dans une mise en oeuvre particulière, il est envisagé la création d'une zone constructible d'un terrain en tant que nouvelle entrée dans la base de données cartographique 111, directement à partir de la tablette numérique 100. Pour cela, la tablette numérique 100 comprend en outre une base de données de formes comprenant un ou plusieurs modèles de formes géométriques. Ensuite, l'interface homme-machine 130 est en outre couplée à la mémoire 110 et au capteur de position 120 pour permettre à un utilisateur d'enregistrer une pluralité de positions du dispositif dans la mémoire 110 en réponse à une pluralité de stimuli. Par exemple, un utilisateur de la tablette numérique 100 peut se déplacer physiquement sur le terrain constructible considéré et enregistrer les coordonnées des lieux où il s'arrête à l'aide de l'interface homme-machine 130, et ce, afin de définir un contour virtuel d'une zone constructible du terrain. En outre, les moyens de traitement du calculateur électronique comprennent un composant d'acquisition de forme géométrique de type connu et conçu pour déterminer la répartition spatiale de la pluralité de positions du dispositif à partir de la base de données de formes et de la pluralité de positions du dispositif. Enfin, les moyens de traitement du calculateur électronique sont en outre configurés pour ajouter la forme géographique déterminée en tant que nouvelle zone constructible du terrain considéré dans la base de données cartographique 111.

Par la suite, le processeur 140 obtient les données concernant le bâtiment à représenter à partir de la base de données géométrique 112. En pratique, le processeur 140 sélectionne le bâtiment à représenter en réponse à une mise en coïncidence entre la zone constructible associée au terrain sélectionné et l'un ou plusieurs des bâtiments de la base de données géométrique 112. Pour réaliser la mise en coïncidence, le processeur 140 peut utiliser un algorithme connu pour comparer la zone constructible associée au terrain sélectionné et chacune des données représentatives de bâtiments à construire de la base de données géométrique 112. Ensuite, le processeur 140 peut sélectionner le bâtiment à construire coïncidant le plus avec la zone constructible associée au terrain sélectionné. Pour cela, il est possible de se baser sur un taux de coïncidence déterminé par une projection géométrique des données représentatives de bâtiments à construire sur la zone constructible associée au terrain sélectionné. Dans un premier exemple, le bâtiment sélectionné peut être celui possédant le taux de coïncidence le plus élevé avec la zone constructible associée au terrain sélectionné. Dans un deuxième exemple, le bâtiment sélectionné peut être celui dont le taux de coïncidence est supérieur à un taux de coïncidence prédéterminé. Le taux de coïncidence prédéterminé peut, par exemple, être stocké dans la mémoire 110. Dans ce deuxième exemple, on peut se trouver dans une situation où plusieurs bâtiments coïncident avec la zone constructible associée au terrain sélectionné. Alors, dans une mise en oeuvre de cet exemple, l'interface homme-machine 130 est en outre configurée pour présenter une pluralité de bâtiments coïncidant avec la zone constructible associée au terrain sélectionné à l'utilisateur. Enfin, l'interface homme-machine 130 peut recueillir le bâtiment sélectionné par l'utilisateur en réponse à au moins un stimulus. Comme indiqué plus haut, une mise en oeuvre particulière envisage que chaque bâtiment de la base de données géométrique 112 est compris dans au moins une zone géographique identifiée comme telle. Dans ce cas, il est possible de limiter la pluralité de bâtiments coïncidant avec la zone constructible associée au terrain sélectionné à l'utilisateur à partir d'une ou plusieurs de ces zones géographiques. Par exemple, en réponse à au moins un stimulus, les moyens de traitement peuvent être configurés pour sélectionner le(s) bâtiment(s) à représenter sur la base d'une mise en coïncidence entre une zone géographique associée au terrain sélectionné et la zone géographique associée à l'un ou plusieurs des bâtiments de la base de données géométrique 112. Dans ce cas de figure, la zone géographique associée au terrain sélectionné est du même type que celle associée aux bâtiments. Bien sûr, la sélection du bâtiment à représenter peut dépendre en outre d'autres paramètres associés au terrain sélectionné et d'autres paramètres du bâtiment à représenter. Dans un exemple, ces autres informations peuvent être comprises dans les bases de données cartographique 111 et géométrique 112. Ainsi, des critères tels que l'adaptation au sol (profondeur des fondations), critères imposés par le POS ou du PLU (surface autorisée, couverture, enduit, etc.). En outre, chacune des caractéristiques du couple terrain-bâtiment sélectionné peut être associé à un coût estimé. Cette dernière fonctionnalité permet de déduire le coût total estimé du projet immobilier, par exemple, en sommant l'ensemble des coûts estimés. Dans un exemple, le coût total estimé est fourni à l'interface homme-machine 130 pour affichage.

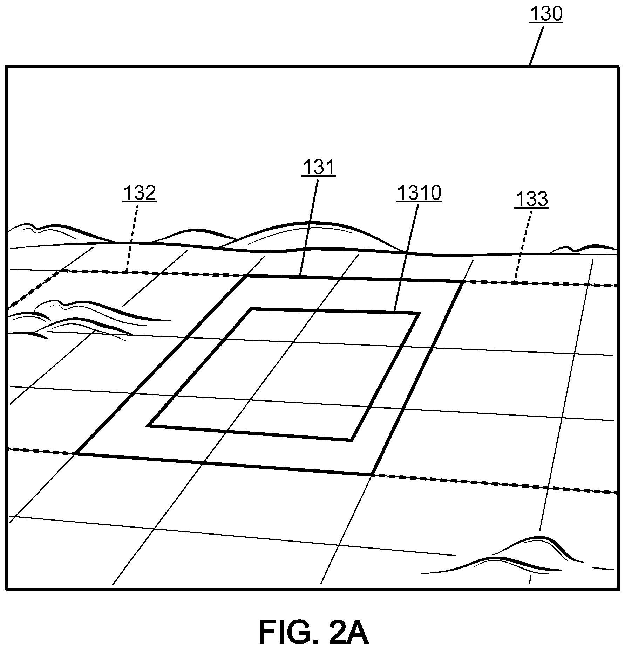

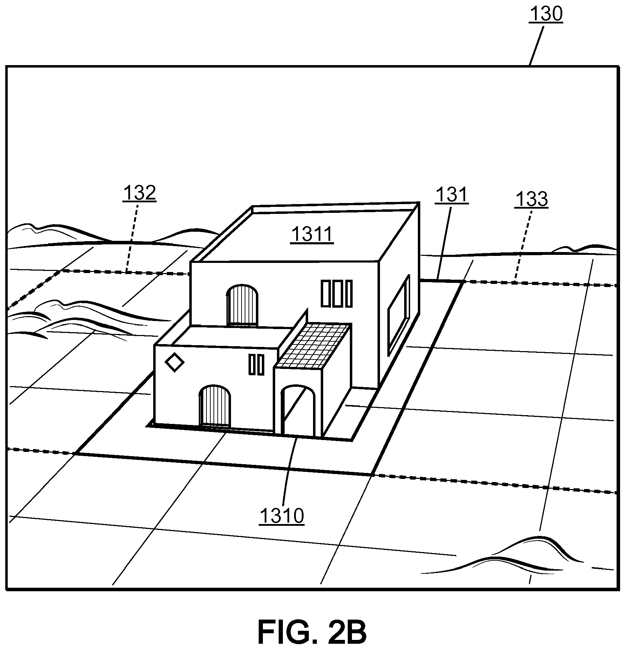

Enfin, le processeur 140 envoie les données obtenues à l'interface homme-machine 130 pour représenter une image synthétique comportant une représentation conforme de la superposition d'un bâtiment sur un terrain. On entend par image synthétique, une image que celles produites dans les systèmes de vision synthétique de type SVS (Synthetic Vision Systems) qui permettent aux pilotes d'aéronef d'avoir une représentation synthétique du monde extérieur tels que les obstacles naturels ou artificiels (immeubles...). On entend par représentation conforme une représentation cartographique qui se superpose sensiblement au terrain effectivement vu par l'utilisateur. En d'autres termes, l'image fournie à l'utilisateur est une image en perspective, synthétique, du bâtiment sélectionné en superposition sur le terrain sélectionné, comparable à l'image vraie, mais indépendante des conditions de visibilité. L'exemple des figures 2a et 2b montre une image synthétique tridimensionnelle sous la forme d'une représentation en perspective dans un plan de référence de l'écran d'affichage de l'interface homme-machine 130. Les figures 2a et 2b montrent les limites séparatives d'un terrain 131 issu de la base de données cartographique 111. La figure 2a montre une zone constructible 1310 associée au terrain 131 ainsi que deux terrains 132 et 133 qui sont voisins du terrain 131. En outre, la figure 2a montre deux terrains 132 et 133 qui sont voisins du terrain 131. Enfin, la figure 2b montre les mêmes éléments que ceux de la figure 2a avec en outre, une représentation d'un bâtiment 1311 superposé sur la zone constructible 1310 associée au terrain 131.

Dans une mise en oeuvre particulière, il est envisagé d'intégrer l'environnement du terrain sélectionné à l'image synthétique. Pour cela, la tablette numérique 100 comprend en outre des moyens d'acquisition d'images couplés au calculateur électronique. Les moyens d'acquisition d'images couplés sont conçus pour acquérir au moins une image de l'environnement de la tablette numérique 100. En outre, les moyens de traitement du calculateur électronique sont configurés de manière à fournir à l'interface homme-machine 130 au moins une image augmentée de l'image synthétique à partir de l'image d'environnement. Dans une mise en oeuvre particulière, l'image augmentée est une image tridimensionnelle sous la forme d'une représentation en perspective dans un plan de référence de l'écran d'affichage de l'interface homme-machine 130.

Dans une autre mise en oeuvre particulière, il est envisagé de faire varier les caractéristiques de l'image affichée par l'écran d'affichage de l'interface homme-machine 130 en fonction de l'orientation de la tablette numérique 100. Pour cela, la tablette numérique 100 comprend en outre un capteur gyroscopique triaxial couplé au calculateur électronique. Le capteur gyroscopique triaxial est conçu pour fournir une information d'orientation tridimensionnelle du dispositif dans un plan de référence de l'écran d'affichage de l'interface homme-machine. En outre, les moyens de traitement du calculateur électronique sont configurés de manière à altérer l'orientation de l'image augmentée à partir de l'information d'orientation tridimensionnelle.

Selon la figure 3, il est également revendiqué, au titre de cette invention, un procédé comprenant les étapes suivantes :
- enregistrement 210 préalable d'objets dans une base de données cartographique et une base de données géométrique,
   - la base de données cartographique comprenant une ou plusieurs données représentatives de terrains, chaque terrain comprenant au moins une zone constructible,
   - la base de données géométrique comprenant une ou plusieurs données représentatives de bâtiments à construire,
- détermination 220 d'au moins une position GPS,
- fourniture 230 d'au moins une image synthétique à une interface homme-machine à partir des bases de données et de la position GPS, l'interface homme-machine comprenant un écran d'affichage conçu pour présenter des informations à un utilisateur et une dalle tactile pour détecter l'appui sur certaines zones, l'appui sur certaines zones formant un stimulus, l'image synthétique comportant une représentation conforme de la superposition d'un bâtiment sur un terrain, et, en réponse au stimulus,
   - la sélection du terrain à représenter le plus proche du dispositif, à partir de la position du dispositif et de l'une ou plusieurs des zones constructibles de la base de données cartographique, et
   - la sélection du bâtiment à représenter en réponse à une mise en coïncidence entre la zone constructible associée au terrain sélectionné et l'un ou plusieurs des bâtiments de la base de données géométrique.

L'invention concerne aussi un produit de programme informatique incorporé de manière tangible dans un support d'informations dans lequel le produit de programme informatique comprend des instructions, qui lors de leur exécution amènent au moins un processeur à réaliser les étapes du procédé selon l'invention.

## Revendications

1. Dispositif mobile (100) de visualisation d'un bâtiment à construire comprenant :
- une mémoire (110) apte à stocker une base de données cartographique et une base de données géométrique,
- la base de données cartographique (111) comprenant une ou plusieurs données représentatives de terrains, chaque terrain comprenant au moins une zone constructible,
- la base de données géométrique (112) comprenant une ou plusieurs données représentatives de bâtiments à construire,
- au moins un capteur de position (120) du dispositif mobile,
- une interface homme-machine (130) comprenant un écran d'affichage conçu pour présenter des informations à un utilisateur et une dalle tactile pour détecter l'appui sur certaines zones, l'appui sur certaines zones formant un stimulus, et
- un calculateur électronique (140) comprenant des moyens de traitement des informations issues des bases de données et du capteur, les moyens de traitement étant configurés de manière à fournir à l'interface homme-machine au moins une image synthétique comportant une représentation conforme de la superposition d'un bâtiment sur un terrain, les moyens de traitement, en réponse à au moins un stimulus, sont en outre configurés pour,
- sélectionner le terrain à représenter le plus proche du dispositif, à partir de la position du dispositif et de l'une ou plusieurs des zones constructibles de la base de données cartographique, et
- sélectionner le bâtiment à représenter en réponse à une mise en coïncidence entre la zone constructible associée au terrain sélectionné et l'un ou plusieurs des bâtiments de la base de données géométrique.

2. Dispositif selon la revendication 1 dans lequel l'interface homme-machine est en outre configurée pour,
- présenter une pluralité de bâtiments coïncidant avec la zone constructible associée au terrain sélectionné à l'utilisateur, et
- recueillir le bâtiment sélectionné par l'utilisateur en réponse à au moins un stimulus.

3. Dispositif selon l'une quelconque des revendications 1 ou 2 dans lequel l'interface homme-machine est en outre configurée pour,
- permettre à un utilisateur d'entrer une valeur de rayon d'un cercle,
- présenter une pluralité de terrains dont la zone constructible coïncide avec un cercle dont le rayon correspond à la valeur de rayon entrée et dont le centre coïncide avec la position du dispositif, et
- recueillir le terrain sélectionné par l'utilisateur en réponse à au moins un stimulus.

4. Dispositif selon l'une quelconque des revendications 1, 2 ou 3 comprenant en outre :
- une base de données de formes comprenant un ou plusieurs modèles de formes géométriques,
- l'interface homme-machine est en outre couplée à la mémoire et au capteur de position pour permettre à un utilisateur d'enregistrer une pluralité de positions du dispositif dans la mémoire en réponse à une pluralité de stimuli,
- les moyens de traitement du calculateur électronique comprennent un composant d'acquisition de forme géométrique conçu pour déterminer la répartition spatiale de la pluralité de positions du dispositif à partir de la base de données de formes et de la pluralité de positions du dispositif, et
- les moyens de traitement du calculateur électronique sont en outre configurés pour ajouter la forme géographique déterminée en tant que nouvelle zone constructible d'un terrain considéré dans la base de données cartographique.

5. Dispositif selon l'une quelconque des revendications 1, 2, 3 ou 4 comprenant en outre :
- des moyens d'acquisition d'images couplés au calculateur électronique et conçus pour acquérir au moins une image de l'environnement du dispositif, et
- les moyens de traitement du calculateur électronique sont en outre configurés de manière à fournir à l'interface homme-machine au moins une image augmentée de l'image synthétique à partir de l'image d'environnement.

6. Dispositif selon la revendication 5 comprenant en outre :
- un capteur gyroscopique triaxial couplé au calculateur électronique et conçu pour fournir une information d'orientation tridimensionnelle du dispositif dans un plan de référence de l'écran d'affichage, et
- les moyens de traitement du calculateur électronique sont en outre configurés de manière à altérer l'orientation de l'image augmentée à partir de l'information d'orientation tridimensionnelle.

7. Dispositif selon l'une quelconque des revendications 1, 2, 3, 4, 5 ou 6 dans lequel chaque bâtiment de la base de données cartographique est associé à au moins une zone géographique, et les moyens de traitement, en réponse à au moins un stimulus, sont en outre configurés pour sélectionner le bâtiment à représenter en réponse à une mise en coïncidence entre la zone géographique associée au terrain sélectionné et la zone géographique associée à l'un ou plusieurs des bâtiments de la base de données géométrique.

8. Dispositif selon l'une quelconque des revendications 1, 2, 3, 4, 5, 6 ou 7 dans lequel le capteur de position est un capteur de position global par satellites, GPS.

9. Dispositif selon l'une quelconque des revendications 1, 2, 3, 4, 5, 6 ou 7 dans lequel l'image synthétique et l'image augmentée sont des images tridimensionnelles sous la forme d'une représentation en perspective dans un plan de référence de l'écran d'affichage.
